# EUROPEAN PATENT SPECIFICATION

(11) **EP 1 156 692 B1**
(45) Date of publication and mention of the grant of the patent: **19.03.2008**
(21) Application number: 00304276.9
(22) Date of filing: 19.05.2000
(51) Int. Cl.: H04Q 7/38

(54) **Internet protocol-based mobile telecommunications networks**
Auf Internet Protokoll basierte mobile Telekommunikationsnetzwerke
Réseaux de télécommunications mobiles basés sur le protocole Internet

(43) Date of publication of application: 21.11.2001
(73) Proprietor: Lucent Technologies Inc., Murray Hill, New Jersey 07974-0636 (US)
(72) Inventor: Brook, Richard, Portishead, North Somerset BS20 7LX (GB); Carpenter, Paul Marcus, Twickenham, Middlesex TW1 3HY (GB); Grech, Michel Louis, Pewsey, Wiltshire SN9 5AZ (GB)
(74) Representative: Williams, David John

(56) References cited:
- WO-A-00/10352
- WO-A-00/10360
- DE-A- 19 651 544

## Description

This invention relates to improved Internet Protocol-based (IP) mobile telecommunications networks, especially to networks having improved facilities for a mobile terminal which visits a network different from its home network.

As the use of mobile telecoms increases, networks are becoming less homogenous, with some network operators offering specialized services which others do not. A mobile user with a sophisticated home network may wish to utilize the same services even when visiting another network, e.g. in another country.

An obvious solution is for all calls from the visiting mobile to be routed to the home network for call set-up signaling and service provisioning, with only the call traffic remaining in the visited network, but if a visiting mobile makes a local call, the "tromboning" of signaling to and from the home network can place a substantial burden on international lines. Further, if an emergency call is to be made, the long signaling route prevents a rapid set-up of the call. Yet further, the home network would in these circumstances need information about the visited network to permit call set-up.

One arrangement by which IP based multimedia services can be provided to a roaming mobile is the Intelligent Network platform known as Customized Application Mobile Enhanced Logic (CAMEL), which is GSM (Global System for Mobile communications) specific. CAMEL copes with roaming subscribers in another network which also supports CAMEL by sending a marker know as the CAMEL Subscription Information (CSI) to a visited network. If the criteria in the CSI are met, the visited network shall request from the home network, advice as to how the call needs to be handled; the home network then instructs the visited network as to how the call is to be completed. However, not all networks support CAMEL, so communication of CAMEL data does not fully solve the practical problem of serving a roaming mobile.

Another issue is that the architecture used for mobile services is closely equivalent to the architecture used for the fixed telephone network. A recently accepted arrangement is for the addition to the GSM architecture of Call State Control Function (CSCF) elements, which manage IP multimedia calls..

A CSCF in one network communicates with a CSCF in another network over an interface known as the M_{w} interface, but the information to be communicated has not yet been defined.

WO 00/10360 discloses a system for providing a roaming service in a telecommunications system. This involves the home network sending a validation response to the host network authorising the roaming telephone for a restricted roaming service.

It is an object of the invention to provide a network in which inter-PLMN (Public Land Mobile Network) communications are defined in such a way that the flexibility of a network operator to control IP multimedia calls and other services is maintained, when these services are provided to visiting mobiles.

According to one aspect of the present invention, there is provided a method of operating a mobile telecommunications network in which a visiting mobile registers with said network, characterised in that:
as part of the registration step, the home network of the visiting mobile provides to the visited network a plurality of call-related redirection criteria which are different for calls originating with and terminating with the visiting mobile terminal;
and the visited network subsequently uses the redirection criteria to decide on a per call basis whether the set-up for that call should be handled locally or handled by the home network.

According to another aspect of the invention, there is provided a mobile telecommunications network for supplying Internet Protocol-based multimedia services to a visiting Mobile Terminal, the network having a Call State Control Function element characterised in that
the Call State Control Function element is arranged to receive and record from the home network of the visiting mobile terminal a plurality of call-related criteria which are different for calls originating with and terminating with the visiting mobile terminal, and to use the redirection criteria to decide on a per call basis whether to handle the call set-up or to pass the call set-up to the home network.

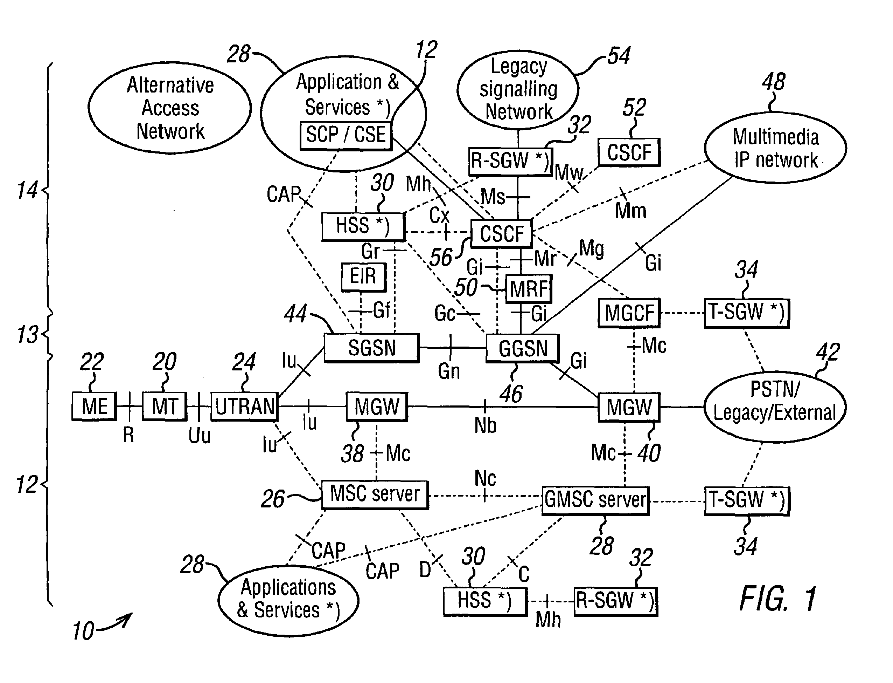

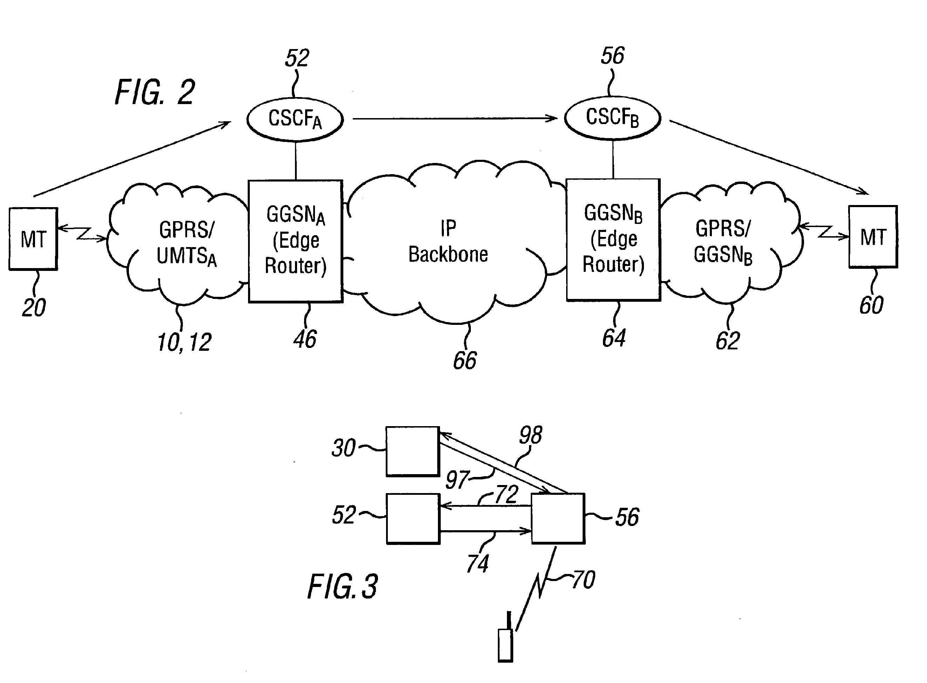

In the accompanying drawings, the prior art is illustrated in Figure 1, which is the reference architecture for a mobile telecommunications network operable by use of Internet Protocol, and in Figure 2, which illustrates a network model for a network-to-network IP-based multimedia or voice call.

The invention will be described with reference to Figures 3 to 5 in which:
Figure 3 illustrates schematically the interchange route for messages according to the invention;
Figure 4 illustrates registration where CAMEL is supported; and
Figure 5 illustrates registration where a different Redirection Condition is sent

In Figure 1, a mobile telecommunications network 10 comprises the Universal Mobile Telecom System (UMTS) 12, the General Packet Radio Service (GPRS) 13, and an additional network 14 for support of IP-based services.

In the UMTS 12, a Mobile Terminal (MT) 20, which may have associated Terminal Equipment (TE) 22, communicates at radio frequency with the UMTS Terrestrial Radio Access Network (UTRAN) 24. The UTRAN 24 is connected through Mobile Switching Centre (MSC) servers 26, 28 to Applications and Services 28 supplied by the network; to Home Subscriber Services (HSS) 30 and a Roaming Signaling Gateway Function (R-SGW) 32; and to a Transport Signaling Gateway Function (T-SGW) 34.

The UTRAN 24 is also connected to Media GateWays (MGW) 36, 38 and connection to the Public Switched Telephone Network (PSTN) 42 can be made via the T-SGW 34 or MGWs38, 40.

The GPRS 13 comprises a Serving GPRS Support Node (SGSN) 44 and a Gateway GPRS Support Node 46 (GGSN) which provides the bearer services for the Multimedia IP Networks 48, and with the network 14.

The additional part of the network 14 comprises, among other features, a Multimedia Resource Function (MRF) 50 connected between the GGSN 46 and a Call State Control Function 56, which in turn communicates with the IP Networks 48, with the R-SGW 32 through which the Legacy Signaling Network 54 can be supported, and to the Applications in Services 28. The Applications and Services include a SCP/CSE (Service Ccontrol Point/CAMEL Service Environment) 29 which is connected to CSCF 52.

The R-SGW 32, the HSS 30, and Applications and Services 28 are duplicated for layout purposes in Figure 1, but in reality belong to the same logical element in the architecture.

The CSCF 56 also communicates with a second CSCF 52 in another network.

This CSCF-to-CSCF communication is illustrated in Figure 2. In a first, home network the MT_{A} 20 communicates via the GPRS/UMTS_{A} 12,13 which connects through the GGSN_{A} 46 to the CSCF_{A} 52 as in Figure 1. In a second network supporting a plurality of MT_{B} s 60, the GPRS/UMTS_{B} 62 communicates via GGSN_{B} 64 with CSCF_{B} 66.

The GGSNs 46, 64 communicate with each other via the IP Backbone, as do the CSCFs 52 and 56.

When MT 20 initiates a call to MT 60, a call set-up signaling message is sent to the CSCF 52 which interacts with CSCF 56 which informs MT 60 of the call.

Each MT 20, 60 has a signaling bearer towards the respective GGSN established by PDP (Packet Data Protocol) context activation. The called MT 60 checks the possibility of call set-up, including the investigation and decision of Quality of Service parameters, and sends the result to the calling MT 20. After call set-up, a connection for user data communication is established.

The nature of the interaction between the home and visited network is defined by the present invention. The message exchange arrangement is shown in Figure 3. On registration of mobile 20 with CSCF 56, message path 70, CSCF 56 sends to HSS 30 an enquiry along with an indication of its capabilities Message path 98. The HSS 30 returns either a CSI or at least one other Redirection Condition, message path 97.

The Redirection Condition in effect informs the visited CSCF 56 about the conditions under which call control in the visited network can be passed to the home network for service control.

The procedure according to the invention has two stages, the first relating to CAMEL and the second being applicable if the visited subscriber network does not support CAMEL.

This can be achieved through an extension of the current procedures for the identification of which version of CAMEL another network supports as described in Third Generation document 23.078.

If the network 62 does support CAMEL, then it sends an indication to HSS 30 of the CAMEL version that it supports, and a CSI will be sent to and held in the CSCF 56. All calls for MT 20 are initiated by a Session Initiation Protocol (SIP) INVITE message, and are handled by CSCF 56 which, for each call, examines the CSI and initiates contact with the home CAMEL Service Environment (CSE) via a CAMEL Application Protocol (CAP) interface between the CSCF in visited network and the CSE in the home network if the necessary trigger conditions are met.

If the network 62 does not support CAMEL, or if the MT 20 is not a registered CAMEL user, a second procedure applies.

The home HSS 30 passes to the visited CSCF 56 Redirection Conditions in the form of a series of call-related criteria; when the visited CSCF 56 receives the criteria, it indicates which of these criteria it can support. Subsequently, the visited CSCF 56, on a per call basis, examines the criteria to decide if it will itself handle a call to or from the visiting MT 20, or whether it will pass the call handling to the home CSCF 52, message path 72.

An example of a series of call-related criteria constituting a Redirection Condition is given in Table 1.

**Table 1**

| **Criteria** | **Parameters** | | **Example Applications** |
|---|---|---|---|
| Originating based service | - | Dialled digit list (dialled number, length, format) or logical name list (based on full name, part name, domain... etc) | Short code dialling (eg 121 for voice mail .. etc) |
| | - | Service codes (basic service codes and basic service groups) | Every call (with the exception |
| | - | All calls | of emergency services |
| | - | All calls with the exception of dialled number list (based on | numbers in the home network |
| Terminating based services | | digits, length, format) or based on logical names list (based on full name, part name, domain ..etc) | |
| | | | |
| | - | Service codes (basic service codes and basic service groups) | |
| | - | All incoming calls | |
| | - | All incoming calls with the exception of incoming number list (based on digits, length, format) logical name list (based on full name, part name, domain... etc) | |

If the visited CSCF 56 can handle the signalling for a specific call, it has the option of doing so; if it is unable to handle the signalling for a specific call, it will pass the set-up signalling to the home CSCF 52.

For example, the visited CSCF 56 may be able to recognise that a network run by the Vodafone company uses the short code dialling of the digits 121 to indicate voicemail. If the visited CSCF 56 can handle a connection to the subscribers' Vodafone voicemail, it connects the call; if not, it passes the call request to the home CSCF 52.

Naturally the criteria for originating based service, i.e. when the visiting MT 20 makes a call, and for terminating based services, i.e. when the visiting MT 20 is to receive a call, are different, as will be seen from Table 1.

One example given in the Parameters column of Table 1 is the Redirection Criterion "All Calls"; with this Redirection Criterion, all calls (except emergency calls) will be handled by the home CSCF 52 although the visited CSCF 56 will still monitor all call set-up attempts so that it can handle emergency calls locally.

Routing of all calls via the home network is an option which may be selected by a network operator which wishes to have as much control of its users' services as is possible. On the other hand, an operator who does not wish to retain maximum control will select the option of providing as many services as possible via the visited network. Such an arrangement naturally improves the income flow to the visited network.

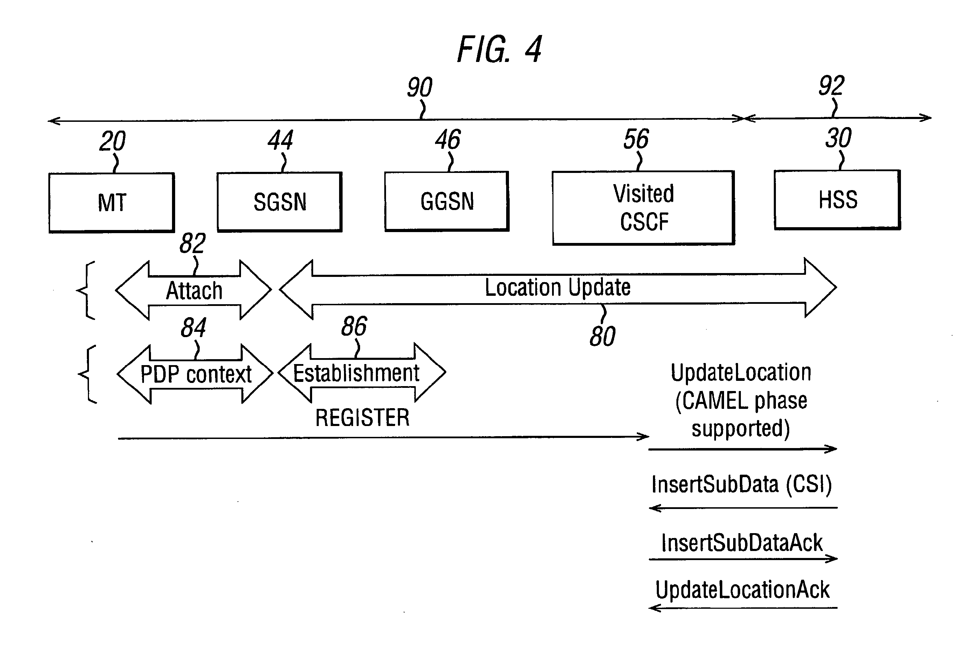

The message exchange arrangement set out generally with reference to Figure 3 is illustrated in Figure 4 when CAMEL is supported by both the visited network 90 and the home network 92. Location update messages are exchanged with the HSS 30 in the home network 92. The exchanges Location Update 80, Attach 82, PDPContext 84 and Establishment 86 during registration are standard. In addition, the visited network 90 sends an Update Location (CAMEL Phase Supported ) message, receives an Insert SubData (CSI) message, sends an Insert SubData Acknowledgement, and receives an Update Location Acknowledgement message.

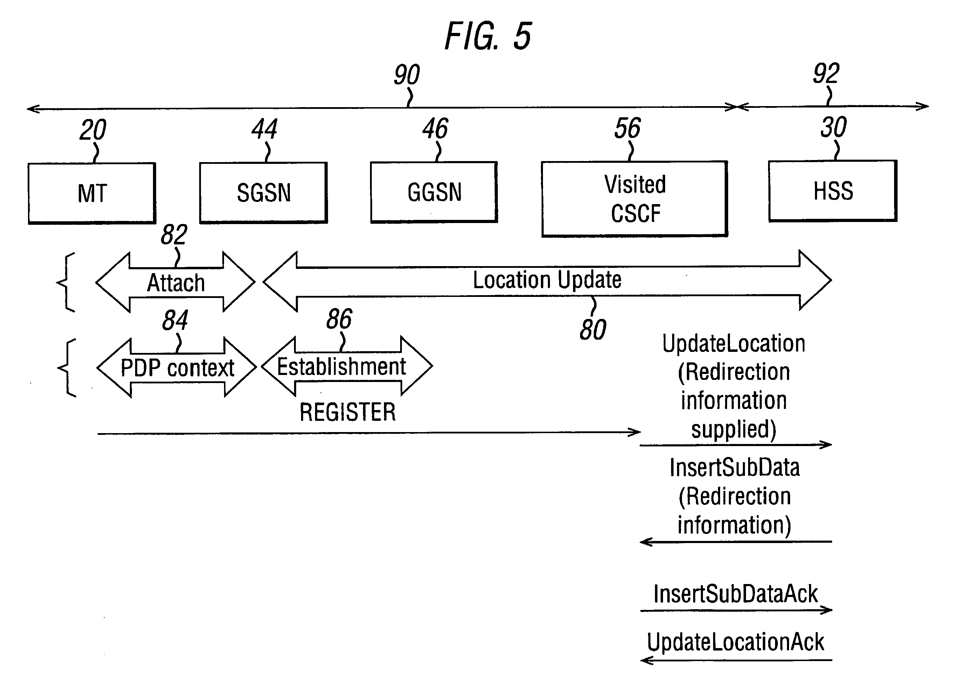

Figure 5 shows the situation when CAMEL is not supported. In addition to the standard messages, the visited network sends an Update Location (Redirection Information Supported) message, in place on the CAMEL supported message in Figure 4.

In the inventive arrangement of deciding whether call routing should take place in the visited or in the home network on a per call basis, efficient use of international signalling is achieved. In addition, users with a wide range of services in their home network can be provided with the same services, even when roaming, and even when CAMEL based services are not available.

## Claims

1. A method of operating a mobile telecommunications network in which a visiting mobile registers with said network, **characterised in that**:
as part of the registration step, the home network of the visiting mobile provides to the visited network a plurality of call-related redirection criteria which are different for calls originating with and terminating with the visiting mobile terminal;
and the visited network subsequently uses the redirection criteria to decide on a per call basis whether the set-up for that call should be handled locally or handled by the home network.

2. A method according to claim 1, in which the visited network sends to the home network an indication that the visited network supports Customised Application Mobile Enhanced Logic.

3. A method according to claim 1, in which the visited network indicates to the home network which of said call-related criteria it can support.

4. A method according to any preceding claim in which set-up of emergency calls is handled by the visited network.

5. A mobile telecommunications network (12,13,14) for supplying Internet Protocol-based multimedia services to a visiting Mobile Terminal (20), the network having a Call State Control Function element (52 or 56) **characterised in that**:
the Call State Control Function element is arranged to receive and record from the home network of the visiting mobile terminal a plurality of call-related criteria which are different for calls originating with and terminating with the visiting mobile terminal, and to use the redirection criteria to decide on a per call basis whether to handle the call set-up or to pass the call set-up to the home network.

## Patentansprüche

1. Verfahren für das Betreiben eines mobilen Telekommunikationsnetzwerks, in dem sich ein Besuchsmobiltelefon in dem Netzwerk registriert, **dadurch gekennzeichnet, dass**:
als ein Teil des Registrierungsschritts das Heimatnetzwerk des Besuchsmobiltelefons dem besuchten Netzwerk eine Mehrzahl von anrufbezogenen Umleitungskriterien bereitstellt, die sich für in dem Besuchsmobilanschluss abgehende und ankommende Anrufe unterscheiden;
und das besuchte Netzwerk die Umleitungskriterien anschließend verwendet, um auf einer Pro-Anruf-Basis zu entscheiden, ob der Aufbau für diesen Anruf lokal gehandhabt werden sollte oder von dem Heimatnetzwerk gehandhabt werden sollte.

2. Verfahren nach Anspruch 1, in dem das besuchte Netzwerk einen Hinweis an das Heimatnetzwerk schickt, dass das besuchte Netzwerk ,Customised Application Mobile Enhanced Logic' unterstützt.

3. Verfahren nach Anspruch 1, in dem das besuchte Netzwerk dem Heimatnetzwerk anzeigt, welches der anrufbezogenen Kriterien es unterstützen kann.

4. Verfahren nach einem der vorhergehenden Ansprüche, in dem der Aufbau von Notrufen von dem besuchten Netzwerk gehandhabt wird.

5. Mobiles Telekommunikationsnetzwerk (12,13,14) für das Zuführen von Internetprotokoll-basierten Multimedia-Diensten zu einem Besuchsmobilanschluss (20), wobei das Netzwerk ein ,Call State Control Function'-Element (52 oder 56) hat, **dadurch gekennzeichnet, dass**:
das ,Call State Control Function'-Element so angeordnet ist, dass es von dem Heimatnetzwerk des Besuchsmobilanschlusses eine Mehrzahl von anrufbezogenen Kriterien empfängt und aufnimmt, die sich für in dem Besuchsmobilanschluss abgehende und ankommende Anrufe unterscheiden, und dass es die Umleitungskriterien verwendet, um auf einer Pro-Anruf-Basis zu entscheiden, ob es den Rufaufbau handhabt oder ob es den Rufaufbau an das Heimatnetzwerk weiterleitet.

## Revendications

1. Procédé de mise en oeuvre d'un réseau de télécommunications mobile dans lequel un mobile visiteur s'enregistre auprès dudit réseau, **caractérisé en ce que** :
en tant que partie de l'étape d'enregistrement, le réseau de rattachement du mobile visiteur fournit au réseau visité une pluralité de critères de redirection liés aux appels qui sont différents pour des appels provenant du terminal mobile visiteur et aboutissant au terminal mobile visiteur ;
et le réseau visité utilise ultérieurement les critères de redirection pour décider sur une base appel par appel si la mise en place de cet appel doit être prise en charge localement ou prise en charge par le réseau de rattachement.

2. Procédé selon la revendication 1, dans lequel le réseau visité envoie au réseau de rattachement une indication du fait que le réseau visité supporte CAMEL *(Customised Application Mobile Ehanced Logic* - logique améliorée mobile d'application personnalisée).

3. Procédé selon la revendication 1, dans lequel le réseau visité indique au réseau de rattachement lesquels parmi lesdits critères liés aux appels il peut supporter.

4. Procédé selon l'une quelconque des revendications précédentes, dans lequel la mise en place des appels d'urgence est prise en charge par le réseau visité.

5. Réseau de télécommunication mobile (12, 13, 14) destiné à fournir des services multimédia basés sur le protocole Internet à un terminal mobile visiteur (20), le réseau possédant un élément CSCF *(Call State Control Fonction* - fonction de commande d'état d'appel) (52 ou 56), **caractérisé en ce que** :
l'élément *Call State Control Fonction* est configuré pour recevoir et enregistrer à partir du réseau de rattachement du terminal mobile visiteur une pluralité de critères liés aux appels qui sont différents pour des appels provenant du terminal mobile visiteur et aboutissant au terminal mobile visiteur, et pour utiliser les critères de redirection pour décider sur une base appel par appel s'il doit prendre en charge la mise en place de l'appel ou passer la mise en place de l'appel au réseau de rattachement.
